# EUROPÄISCHE PATENTSCHRIFT

(11) **EP 0 725 454 B1**
(45) Veröffentlichungstag und Bekanntmachung des Hinweises auf die Patenterteilung: **19.08.1998**
(21) Anmeldenummer: 96100968.5
(22) Anmeldetag: 24.01.1996
(51) Int. Cl.: H01M 4/74, H01M 4/66, H01M 4/70

(54) **Massenträger und Elektroden für galvanische Primär- und Sekondärelemente**
Active mass support and electrode for primary and secondary galvanic elements
Support pour masse active et électrode pour éléments galvaniques primaires ou secondaires

(30) Priorität: 03.02.1995 DE 19503447
(43) Veröffentlichungstag der Anmeldung: 07.08.1996
(73) Patentinhaber: Hoechst Trevira GmbH & Co. KG, 65929 Frankfurt am Main (DE)
(72) Erfinder: Disselbeck, Dieter, Dr., D-65812 Bad Soden (DE); Wellenhofer, Herbert, Dr., D-86399 Strassberg-Bobingen (DE)
(74) Vertreter: Zounek, Nikolai, Dipl.-Ing.

(56) Entgegenhaltungen:
- EP-A- 0 406 910
- US-A- 4 237 205

## Beschreibung

Die vorliegende Erfindung betrifft einen Träger für Elektroden für galvanische Primär- oder Sekundärelemente, der aus einer maschenoffenen, dreidimensionalen Netzwerkstruktur aus metallisierten Kunststoffäden besteht, wobei zumindest die äußere Metallschicht der Kunststoffäden aus Titan besteht, sowie eine Elektrode, insbesondere eine Positivelektrode für Akkumulatoren, aus einer aktiven Masse und einem erfindungsgemäßen Träger, der die aktive Masse skelettartig durchsetzt.

Die Elektroden galvanischer Elemente, insbesondere elektrochemischer Speicher, bestehen aus einer positiven bzw. negativen aktiven Masse und einem diese Masse tragenden Material. Übliche Trägermaterialien bei Akkumulatoren sind metallische Gitter unterschiedlicher Ausbildung.
Ein zentrales Anliegen der technischen Weiterentwicklung von galvanischen Elementen, insbesondere von Akkumulatoren, insbesondere im Hinblick auf die Konstruktion umweltfreundlicher Elektrofahrzeuge, ist die Verringerung des Gewichts, die Erhöhung der Stromausbeute und die Steigerung der Lebensdauer der Fahrzeugbatterien. Ein besonderes Augenmerk liegt bei dieser Entwicklung auf der Reduzierung des Gewichts der Elektroden, das zu einem sehr großen Teil vom Gewicht der die aktiven Massen tragenden Trägerkonstruktion bestimmt wird.
Bei neueren Entwicklungen kann zum Beispiel ein Hartbleigitter durch ein verbleites Gitter aus Kupfer ersetzt werden.
Auch Gitterkonstruktionen aus metallüberzogenen Polymeren, z. B. Thermoplasten, die relativ grobe Zellen aufweisen, die mit den aktiven Elektrodenmassen gefüllt sind, wurden bereits in vielen Publikationen beschrieben. Genannt seien hierzu die U.S.-Patentschriften 2 694 100, 2 713 078, 3 516 863, 3 516 864,
3 621 543, 3 738 871, 4 237 205, die DE-A-25 26 993 und die DE-C-1 771 822.
Allerdings hat sich unseres Wissens keine dieser Konstruktionen in der Praxis durchgesetzt, da sie aufwendig, z.B. durch Spritzguß oder andere Formgebungsmaßnahmen, herzustellen sind, einen höheren elektrischen Widerstand haben als rein metallische Gitter und aufgrund der groben Zellstruktur hohe Innenwiderstände in den aktiven Massen zur Folge haben. Darüberhinaus ist auch die mechanische Stabilisierung der aktiven Massen durch derartig grobe Trägerkonstruktionen nicht ausreichend gesichert.
Elektroden bestehend aus metallisierten, mit aktiven Massen gefüllten Fasermatten (nonwovens) von ca. 1 bis 10 mm Dicke sind in der DE-A-25 33 408, Elektroden aus metallisierten, mit aktiven Massen gefüllten Geweben bzw. Gelegen in der EP-B-0 097 090 bzw. US-A-4 476 206 beschrieben worden. Immerhin können durch diese und ähnliche Konstruktionen und Maßnahmen, wie beispielsweise auch die Einlagerung von leitfähigen Fasern in der aktiven Masse, Fortschritte hinsichtlich des Leistungsgewichts, d.h. der pro kg Batteriegewicht zu speichernden elektrischen Energiemenge, erzielt werden, doch bleibt nach wie vor der Wunsch offen, das Leistungsgewicht und die Leistungscharakteristik galvanischer Primär- und Sekundärelemente weiter zu verbessern.

Eine sehr deutliche Verbesserung des Leistungsgewichts wird erzielt durch eine aus dem Europäischen Patent 0 406 910 bekannte Elektrodenkonstruktion für galvanische Primär- und Sekundärelemente.
Bei dieser bekannten Konstruktion wird die Verbesserung dadurch erzielt, daß die Elektroden der galvanischen Elemente aus einem dreidimensional verformten, formstabilen, leitfähigen Netzwerkstoff auf der Basis eines vorzugsweise tiefziehfähigen, ggf. beharzten Textilmaterials und aus der aktiven Masse bestehen, wobei die aktive Masse vom elektrisch leitfähigen Netzwerkstoff räumlich skelettartig durchdrungen wird.

Ein elektrisch leitfähiger Netzwerkstoff, der von seiner Geometrie her dem in den aus diesen Europäischen Patenten bekannten Elektroden enthaltenen Netzwerkstoff entspricht, ist aus der DE-A-39 16 713 bekannt.
Sein wesentliches Merkmal ist ein räumliches Netzwerk mit offenen Maschen aus Stäbchen, Knotenpunkten und Hohlräumen, so daß er für andere Stoffe, wie z. B. die aktive Elektrodenmasse, durchdringbar ist. Die elektrische Leitfähigkeit des eingesetzten Netzwerkstoffs wird vorzugsweise durch chemo-galvanische Metallisierung, insbesondere durch Verkupferung und ggf. zusätzliche Verbleiung, seiner Oberfläche erzielt.

Die erheblichen Vorteile, die durch diese Elektrodenkonstruktion erhalten werden, sind im wesentlichen auf den Einsatz des Netzwerkstoffs als Träger für die aktiven Massen zurückzuführen:
Die dichte Durchsetzung der Massen mit den metallisierten Trägermaschen stabilisiert nicht nur die Massen mechanisch sehr gut, sondern sie führt auch zu einer deutlichen Verringerung des Innenwiderstands der Elektroden wegen der kurzen Stromwege zur nächstgelegenen metallischen Ableitung. Zusätzlich erhöht das im Vergleich zu einem Metallgitter geringe Gewicht des metallisierten Netzwerkstoffs das Leistungsgewicht der so hergestellten Batterien erheblich.

Es hat sich allerdings gezeigt, daß diese Träger-Konstruktion aus einem verkupferten und ggf. zusätzlich verbleiten Netzwerkstoff sich zwar ausgezeichnet für die Herstellung von negativen Elektroden, weniger gut aber für die Herstellung positiver Elektroden eignet. Dies beruht möglicherweise darauf, daß die elektrochemischen Reaktionen an positiven Elektroden nicht nur relativ unedle Metalle, wie z.B. Blei, in Oxide überführen sondern daß sie auch zu einem allmählichen Abbau von Metallschichten aus edleren Metallen, wie Kupfer, führen, wodurch die positive Elektrode nach relativ kurzer Betriebsdauer unbrauchbar wird.

Es bestand daher ein dringendes Bedürfnis, diesen Träger so weiterzubilden, daß er sich auch für die Herstellung von positiven Elektroden von galvanischen Primär- und Sekundärelementen eignet.

Es wurde nun überraschenderweise gefunden, daß man einen solchen, aus den oben genannten Patenten bekannten Träger aus einem metallisierten, maschenoffenen Netzwerk auch für die Herstellung von positiven Elektroden einsetzen kann, wenn die mit der aktiven Masse und dem Elektrolyt in Berührung stehende Metallschicht aus einem Ventilmetall, vorzugsweise aus Titan besteht.

Ein Gegenstand der vorliegenden Erfindung ist somit ein Massenträger für Elektroden galvanischer Primär- oder Sekundärelemente aus einer maschenoffenen, dreidimensionalen Netzwerkstruktur aus mit einer oder mehreren gut leitenden, dünnen Metallschichten lückenlos überzogenen Kunststoffäden, der zur Ausbildung der dreidimensionalen Struktur mit über seiner Fläche verteilten buckelartigen Vertiefungen und/oder Erhöhungen (Nr. 3 in den Figuren 1 und 2; Nrn. 13 und 14 in den Figuren 3 und 4) versehen ist, in deren Bereich der Abstand zwischen den Kunststoffäden vergrößert ist, der dadurch gekennzeichnet ist, daß zumindest die äußere Metallschicht der Kunststoffäden aus einem Ventilmetall besteht.

Ventilmetalle im Sinne der vorliegenden Erfindung sind solche Metalle, die in saurem Medium bei anodischer Oxidation eine dichte Oxidschicht ausbilden, die vorzugsweise eine ausreichende elektrische Leitfähigkeit aufweist.
Solche Ventilmetalle sind Metalle der vierten, fünften und sechsten Gruppe des periodischen Systems der Elemente, insbesondere die Metalle Titan, Zirkon, Hafnium, Vanadin, Niob, Tantal, Molybdän und Wolfram.

Besonders bevorzugtes Ventilmetall ist Titan.

Die offenen Maschen der filigranartigen Netzstruktur des elektrisch leitfähigen Netzwerkstoffs sind ein charakteristisches geometrisches Merkmal dieses Materials.

Vorzugsweise besteht die maschenoffene Netzwerkstruktur aus einer durch einen flächenvergrößernden, maschenöffnenden Verformungsprozeß, beispielsweise durch Tiefziehen, dreidimensional verformten Textilfläche.

Beispielsweise werden die offenen Maschen der Netzwerkstruktur von den durch Tiefziehen gedehnten Maschen eines flächenförmigen Textilmaterials, wie z.B. eines durch dehnbare Schußfäden fixierten Kreuzgeleges, eines Gewebes, insbesondere aber einer Maschenware, wie z.B. einer Raschelware, gebildet. Wird als Basismaterial für den Netzwerkstoff ein Kreuzgelege, in dem die Filamentbündel sich etwa in Winkeln von 5 bis 30° kreuzen, oder ein Gewebe eingesetzt, so ist es erforderlich, daß das flächenförmige Textilmaterial aus Fasern besteht, oder zumindest solche in einem wirksamen Anteil enthält, die selbst eine relativ hohe Dehnfähigkeit aufweisen, die reversibel oder nichtreversibel sein kann, damit die ausreichende Tiefziehfähigkeit des Materials gegeben ist. Ein Fasermaterial mit hoher nichtreversibler Dehnfähigkeit besteht z.B. aus teilorientierten Filamenten, welche durch Ausspinnen mit rel. hoher Spinnabzugsgeschwindigkeit hergestellt werden. Weitgehend unabhängig von der Dehnfähigkeit des Fasermaterials dagegen ist die Tiefziehfähigkeit von Maschenware. Es ist daher bevorzugt, als Basis für die Herstellung der elektrisch leitfähigen Netzwerkstoffe eine Maschenware einzusetzen. Das Fasermaterial der flächenförmigen Textilmaterialien ist im Prinzip von untergeordneter Bedeutung. Man wird es jedoch so auswählen, daß es dem vorgesehenen Einsatzzweck in optimaler Weise zu genügen verspricht. Während die physikalischen Eigenschaften von Naturfasern nur im begrenzten Rahmen zu beeinflussen sind, können die physikalischen Eigenschaften von Synthesefasern optimal dem gewünschten Einsatzzweck angepaßt werden. Es ist daher besonders bevorzugt, zur Herstellung der erfindungsgemäßen, elektrisch leitfähigen Netzwerkstoffe, von Synthesefasermaterialien, wie z.B. Polyamiden, Polyacrylnitril, Polyolefinfasern, insbesondere aber von Polyestermaterialien auszugehen. Besonders bevorzugt sind hier wiederum solche Typen, die eine besonders hohe mechanische Festigkeit aufweisen. Ein Beispiel für derartige Fasermaterialien sind das Handelsprodukt (R)TREVIRA hochfest oder auch endgruppenverschlossene Polyestermaterialien, die besonders widerstandsfähig sind gegen chemische Einflüsse.

Die dreidimensional verformten, elektrisch leitfähigen Netzwerkstoffe sind vorzugsweise, und insbesondere wenn sie aus einem Fasermaterial mit reversibler Dehnbarkeit bestehen, durch eine Harzimprägnierung des Textilmaterials mit einem thermoplastischen oder duroplastischen Harz formstabilisiert.
Bei Einsatz eines relativ niedrig erweichenden, teilorientierten Fasermaterials kann auf eine gesonderte Harzimprägnierung verzichtet werden, weil das thermoplastische Filamentmaterial selbst die Funktion eines thermoplastischen Harzes übernimmt. Demgemäß ist unter Formstabilisierung durch einen Thermoplasten im Sinne dieser Erfindung auch die Formstabilisierung zu verstehen, die durch das Erweichen der thermoplastischen Filamente des verformten flächenförmigen Textilmaterials erfolgt.
Bei Einsatz eines reversibel verformbaren Fasermaterials zur Herstellung des Netzwerkstoffs durch Tiefziehen oder bei der Herstellung des Netzwerkstoffs durch andere Verfahren als Tiefziehen, z.B. durch spezielle Webverfahren, kann eine Beharzung mit einem thermoplastischen oder duroplastischen Harz im Prinzip ebenfalls unterbleiben, da durch die anschließende Metallisierung eine Stabilisierung der Netzwerkstruktur erfolgt. Allerdings kann aus Gründen der Handhabbarkeit der dreidimensional geformten Netzwerkstruktur bei den Metallisierungsschritten eine Stabilisierung durch Beharzung oder Formstabilisierung durch Thermoplaste vorteilhaft sein.
Die in den Netzwerkstoffen vorzugsweise enthaltenen formstabilisierenden Harze können den verschiedenen bekannten thermoplastischen oder duroplastischen Harzgruppen entstammen, sofern ihre mechanischen Eigenschaften die Formstabilisierung der erfindungsgemäßen Netzwerkstoffe zulassen. Beispiele für geeignete thermoplastische Harze sind Polyacrylate oder Polyvinylchlorid; bevorzugte Harze sind jedoch Duroplaste, wie z.B. Epoxid-, Melamin- und insbesondere Phenolharze.
Die in den dreidimensional verformten Netzwerkstoffen enthaltene Harzmenge ist auf das Gewicht des Textilmaterials so abgestimmt, daß sich beim Tiefziehen des flächenförmigen Textilmaterials die Maschen zu einem filigranen Netzwerk öffnen. Geeignete Auflagenmengen liegen im Bereich von 50 bis 500, vorzugsweise 100 bis 300 g Harz/m² des unverstreckten Textilmaterials. Innerhalb dieser angegebenen Bereiche wird die Harzmenge noch zweckmäßig an das Quadratmetergewicht des tiefziehfähigen Textilmaterials angepaßt. So wird man bei Einsatz eines schweren Textilmaterials innerhalb der oberen Hälfte der angegebenen Bereiche arbeiten, bei leichten Textilmaterialien in der unteren Hälfte. Das ausschlaggebende Kriterium ist, wie oben angegeben, die Bedingung, daß sich beim Tiefziehvorgang die Maschen des Textilmaterials zu einem Netzwerk öffnen.
Der als erfindungsgemäßer Masseträger eingesetzte dreidimensional verformte Netzwerkstoff weist eine Vielzahl von Verformungen auf, die sich wenigstens in eine Richtung erstrecken, die eine Komponente senkrecht zur ursprünglichen Ebene des textilen Flächengebildes aufweist, aus dem der Netzwerkstoff hergestellt wurde.

Vorzugsweise weist er auf einer Basisfläche in regelmäßiger Anordnung eine Vielzahl von Erhebungen auf. In einer weiteren Ausführungsform weist der Netzwerkstoff auf der Ebene der ursprünglichen Basisfläche in regelmäßiger Anordnung eine Vielzahl von Erhebungen und Vertiefungen auf. Die Erhebungen und Vertiefungen können die Form von Näpfchen mit runder oder eckiger Basisfläche oder z.B. die Form von Stegen haben. Die Erhebungen und Vertiefungen können aber je nach Einzelfall auch andere Formen haben, zum Beispiel die Form von Kegeln oder Kegelstümpfen, Pyramiden oder Pyramidenstümpfen mit unterschiedlich vieleckiger Basis, Zylinder, Prismen, sphärische Segmente usw. Besonders bevorzugt ist es auch, wenn die Scheitelpunkte bzw. -flächen der Erhebungen alle in einer Ebene und parallel zur Basisfläche liegen, was sinngemäß genauso für die Vertiefungen gilt.

Weiterhin ist es von Vorteil, wenn Zahl, Größe, Form und räumliche Anordnung der Verformungen pro Flächeneinheit des Flächengebildes so ausgewählt werden, daß das rechnerische Produkt aus der Größe der nach der Verformung verbliebenen Fläche der ursprünglichen Ebene und der Größe der Plateauflächen der Erhebungen oder das Produkt der Größe der Plateauflächen der Erhebungen und der Bodenflächen der Vertiefungen möglichst groß wird.
Weiter ist es von Vorteil, wenn Zahl, Größe, Form und räumliche Anordnung der Verformungen pro Flächeneinheit des Flächengebildes so ausgewählt werden, daß sie für die unterschiedliche Porosität oder sonstige Konsistenz der im Einzelfall zu Verwendung gelangenden aktiven Masse eine optimale Massehaftung bieten.

Der als Träger in diesen Elektroden eingesetzte Netzwerkstoff kann selbstverständlich auch andere dreidimensionale Verformungen aufweisen. Es ist auch durchaus möglich, daß in dem erfindungsgemäßen dreidimensional verformten Netzwerkstoff die Fläche des ursprünglichen Textilmaterials überhaupt nicht mehr erhalten bleibt, wenn beispielsweise das Tiefziehen des Materials durch Stempel von beiden Seiten der Textilfläche her erfolgt, so daß in dem Material näpfchen- bzw. hütchenförmige Ausformungen abwechselnd nach oben und nach unten auftreten.

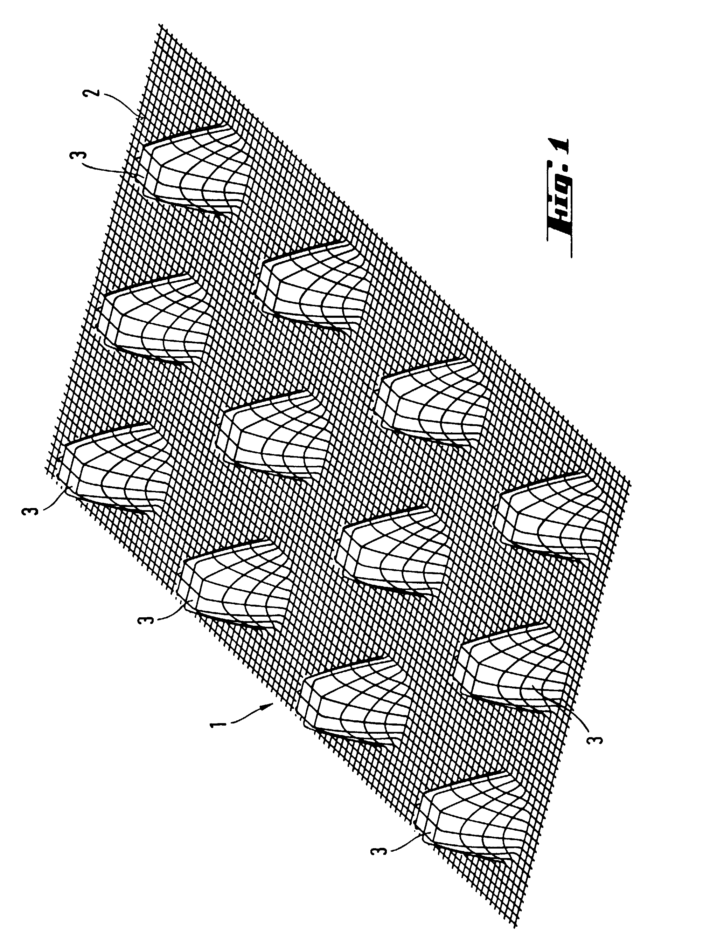

Die Figur 1 veranschaulicht schematisch einen Abschnitt eines Netzwerkstoffs (1), der auf einer Basisfläche (2) eine Vielzahl von hütchenförmigen Erhebungen (3) aufweist.

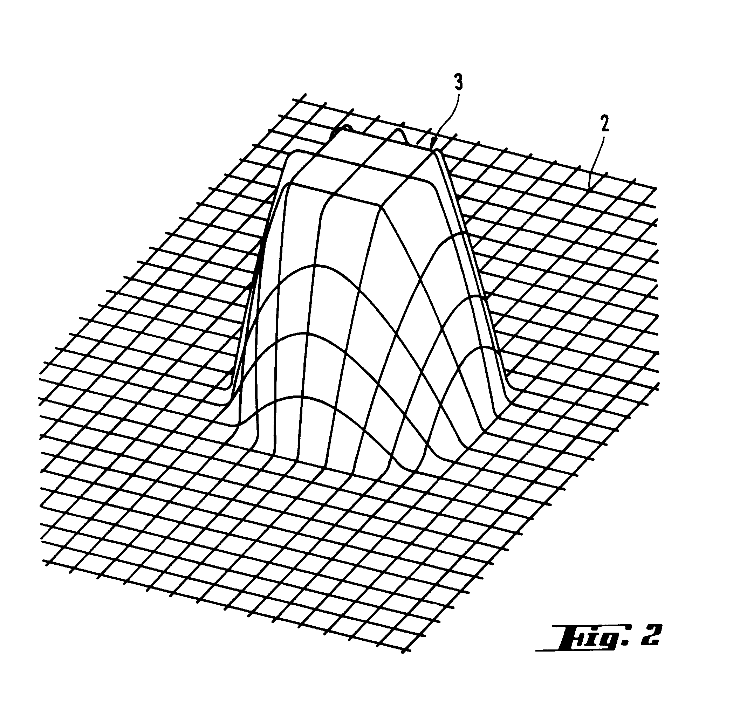

Die Figur 2 zeigt in Vergrößerung die schematische Darstellung einer der hütchenförmigen Verformungen und veranschaulicht deutlich die im Bereich der Verformung auftretende drastische Erweiterung der Maschenstruktur des Textilmaterials.

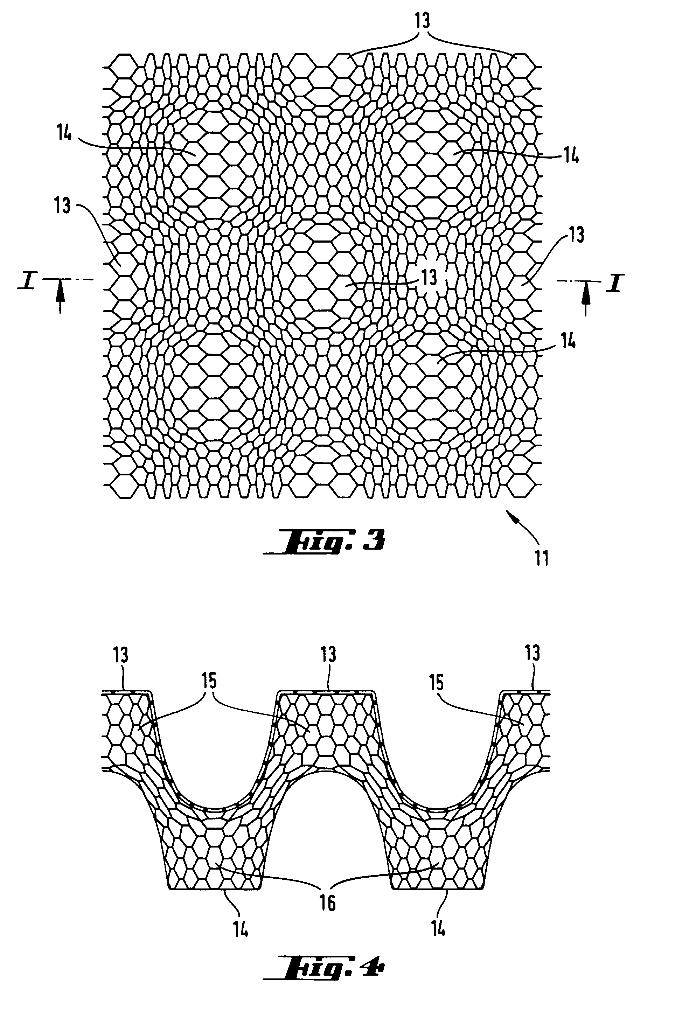

Die Figur 3 zeigt in senkrechter Aufsicht einen Abschnitt eines Netzwerkstoffs (11), der eine regelmäßige Anordnung von Erhebungen (13) und Vertiefungen (14) aufweist, und der auf einem Netzwerkstoff basiert, der erhalten wird, wenn beispielsweise das Tiefziehen des Materials durch Stempel von beiden Seiten der Textilfläche her erfolgt.

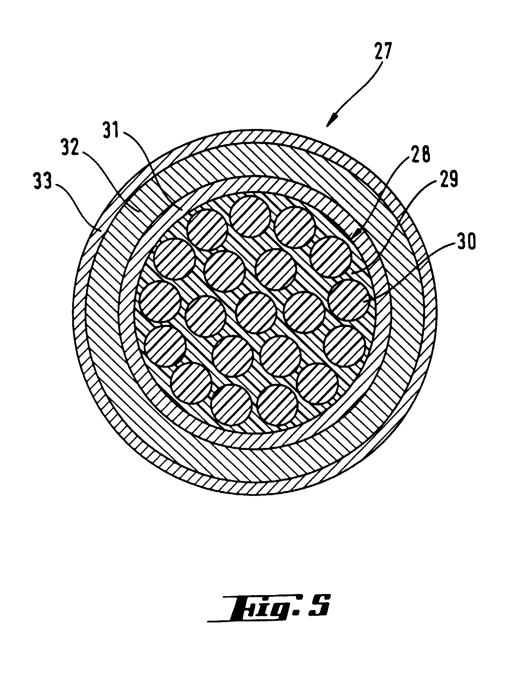

Figur 4 zeigt eine Aufsicht auf die Schnittfläche I-I des Netzwerkstoffs (11) von Figur 3 mit den als kleine schwarze Kreise (17) dargestellten geschnittenen harzversteiften Garnen der Netzwerkstruktur und den Erhebungen (13) und Vertiefungen (14). Das Netzwerk in den Bereichen (15) der Abbildung stellt die Innenseiten der aufgeschnittenen Erhebungen (13), das Netzwerk in den Bereichen (16) der Abbildung stellt die Außenseite der hinter der Schnittlinie liegenden Vertiefungen (14) dar.

Für die gute Halterung der aktiven Masse sind weiter die Vertiefungen (14) und die Erhöhungen (13) selbst verantwortlich, welche die Masse mit Ausnahme der von der Plattenebene abgewandten Seite praktisch allseits einfassen. Die Breite der Erhöhungen (13) sowie der Vertiefungen (14) liegt im Bereich von 3 bis 10 mm, insbesondere 4 bis 6 mm. Die Tiefe der Erhöhungen (13) und Vertiefungen (14) beträgt 1 bis 5 mm, insbesondere 2 bis 3 mm. Das Verhältnis von Breite zu Tiefe soll im Bereich 2 : 1 bis 3 : 1 liegen.
Insofern ist die Tiefe der Erhöhungen (13) und der Vertiefungen (14) in den Figuren aus Gründen einer klaren Darstellung des Verformungsprinzips übertrieben wiedergegeben. Von besonderem Vorteil bei der in den Figuren 3 und 4 dargestellten Ausführungsform ist, daß die benachbarten Erhöhungen (13) und Vertiefungen (14) unmittelbar aneinandergrenzen, derart, daß das Kunststoffnetzwerk auch in den Grenzbereichen benachbarter Erhöhungen (13) und Vertiefungen (14) zweidimensional verzogen ist und dort die vergrößerten Maschen vorliegen. Durch das Abwechseln von in entgegengesetzten Richtungen verzogenen Erhöhungen (13) und Vertiefungen (14) wird ein für die Aufnahme großer Mengen an aktiver Masse, für eine besonders gute mechanische Halterung der aktiven Masse und für eine kurzwegige Stromableitung aus der bzw. Stromeinleitung in die aktive Masse besonders geeigneter Massenträger geschaffen.

Die ursprüngliche Textilfläche kann auch durch eine Vielzahl schmaler, sich in der gleichen Längsrichtung erstreckender Stempel von beiden Seiten zu einer Zickzackfläche ausgezogen und in dieser Form stabilisiert werden. Besonders bevorzugt sind jedoch die in den Figuren 1 bis 4 schematisch dargestellten Formen des Netzwerkstoffs mit becherartigen Erhöhungen und ggf. Vertiefungen. Wesentlich ist, wie oben dargelegt, daß die becherartigen Deformationen kleine Zellen bilden, die die aktiven Massen mechanisch sehr gut festhalten, daß die in den einzelnen becherartigen Zellen enthaltenen Massen miteinander durch die offenen Maschen des tragenden Netzwerks in Verbindung stehen und daß die Stromwege in der aktiven Masse zum nächstgelegenen Teil des Netzwerks kurz sind.

Das oben beschriebene Verfahren zur Herstellung des in den erfindungsgemäßen Elektroden enthaltenen Netzwerkstoffs durch Tiefziehen eines tiefziehfähigen flächenförmigen Textilmaterials stellt eine besonders vorteilhafte Möglichkeit zur Ausführung der vorliegenden Erfindung dar.
Zur Herstellung des Netzwerks können aber selbstverständlich auch andere Formgebungsverfahren, wie z.B. spezielle Web- oder Wirkverfahren eingesetzt werden, die geeignet sind, ein ggf. durch ein duroplastisches oder thermoplastisches Harz formstabilisiertes Textilmaterial herzustellen, das wie oben beschrieben räumlich verformt ist und das die charakteristische offenmaschige Netzstruktur des durch Tiefziehen herstellbaren Netzwerkstoffs aufweist.

Ein als Masseträger eingesetzter Netzwerkstoff muß eine möglichst gute elektrische Leitfähigkeit aufweisen.
Sehr gute Ergebnisse bezüglich der Leitfähigkeit werden durch eine Metallisierung der Oberfläche des Netzwerkstoffs erzielt. Die Netzwerkstruktur des erfindungsgemäßen Masseträgers ist daher mit einer oder mehreren Schichten aus elektrisch gut leitenden Metallen, vorzugsweise mit einer Schicht aus einem elektrisch gut leitenden, möglichst duktilen Metall lückenlos überzogen, auf der erfindungsgemäß als äußere Metallschicht eine Ventilmetall-Schicht, z.B. eine Titanschicht aufgebracht ist.
Die unter der Ventilmetall-Schicht, vorzugsweise der Titanschicht, liegenden Metallschichten, vorzugsweise eine Kupferschicht, die im wesentlichen den Strom leiten, werden im Folgenden gemeinsam als Leitschicht bezeichnet.

Die Dicke der Leitschicht beträgt 5 bis 300, vorzugsweise 10 bis 100 µm. Insbesondere wird die Leitschicht des erfindungsgemäßen Masseträgers von Metallen gebildet, die in der elektrochemischen Spannungsreihe, bezogen auf Wasserstoff, ein Normalpotential von -1,3 bis + 1,6, vorzugsweise -0,8 bis + 1,6 V aufweisen.
Dabei sind, wie oben bereits erwähnt, duktile Metalle besonders günstig.
Der elektrisch leitfähige Metallüberzug des erfindungsgemäßen Netzwerkstoffs, die Leitschicht, kann einschichtig oder mehrschichtig sein; so kann z.B. auf eine erste Metallschicht aus Kupfer eine Edelmetallschicht folgen oder es kann auf einer relativ dünnen Schicht aus Kupfer oder Nickel eine stärkere Schicht anderer Metalle, wie z.B. aus Silber, Blei, Zinn oder Gold folgen.

Der elektrisch leitende Metallüberzug des erfindungsgemäßen Netzwerkstoffs kann auch aus einer Mischung verschiedener Metalle, vorzugsweise solcher, die miteinander Legierungen bilden, bestehen.

Bevorzugt für die Leitschicht des Netzwerkstoffes des erfindungsgemäßen Masseträgers sind Kupfer, Nickel oder Silber, wobei Kupfer sowohl aus technischen als auch aus wirtschaftlichen Gründen besonders bevorzugt ist.

Es sei jedoch betont, daß unabhängig vom Aufbau der Leitschicht die äußere Metallschicht des Metallüberzugs des erfindungsgemäßen Masseträgers aus einem Ventilmetall, vorzugsweise aus Titan besteht.

Vorzugsweise findet sich unmittelbar auf dem Polymermaterial des Netzwerkstoffs eine relativ dünne, elektrisch leitfähige Schicht, deren Aufbau sich in der Regel entweder bezüglich seiner chemischen Natur oder seiner Struktur von dem der Leitschicht unterscheidet. Diese elektrisch leitende Grundschicht, auf der die Leitschicht liegt, besteht vorzugsweise aus einer wenige µm, zweckmäßigerweise 0,5 bis 2 µm, dicken Metallschicht aus chemisch reduktiv oder durch Bedampfung abgeschiedenem Gold, Nickel oder vorzugsweise Kupfer, oder auch aus einer Schicht anderer elektrisch leitfähiger Substanzen wie leitfähigem Ruß (Kohlenstoff), Graphit oder Metallpulvern, die auch harzgebunden sein können, oder aus einer elektrisch leitfähigen Polymerschicht. Eine bevorzugte nichtmetallische leitfähige Grundschicht besteht aus einer auf dem Netzwerkstoff abgeschiedenen Schicht aus Polypyrrol.

Die auf der Leitschicht des erfindungsgemäßen Masseträgers liegende Ventilmetall-Schicht, vorzugsweise die Titanschicht, ermöglicht den Einsatz des Masseträgers zur Herstellung von positiven Elektroden. Sie verhindert den korrosiven Abbau der Leitschicht bei der Formierung und Ladung des galvanischen Sekundärelements. Es ist daher erforderlich, daß diese Titanschicht die Leitschicht lückenlos bedeckt und gegen den Angriff des Elektrolyten und der in der aktiven Masse ablaufenden Elektrodenreaktion abschließt.
Es hat sich gezeigt, daß die Titanschicht mindestens eine Stärke von 0,01 µm haben sollte, um einen wirksamen Schutz für die Leitschicht zu bilden.
Vorzugsweise hat die Titanschicht eine Dicke von über 0,03 µm, insbesondere von 0,03-0,1 µm.
Vorzugsweise ist die Ventilmetall-Schicht, z.B. die Titanschicht, oberflächlich passiviert. Besonders bevorzugt ist eine galvanisch erzeugte Passivierungsschicht. Die Passivierungsschicht vermindert die Leitfähigkeit des Ventilmetallüberzugs, z.B. des Titanüberzugs, praktisch nicht. Dies ist überraschend, da z.B. die auf Aluminium bei anodischer Oxydation entstehende Passivierungsschicht einen sehr hohen elektrischen Widerstand aufweist, der einen Stromfluß völlig verhindert.

Die erfindungsgemäßen Massenträger entsprechen in Maschenstruktur und Form der Flächentopographie genau den zur Herstellung eingesetzten Netzwerkstoffen. Ein Beispiel für die Maschenstruktur und die geometrische Form der erfindungsgemäßen Massenträger zeigen somit die Figuren 3 und 4. Der Unterschied zwischen den Netzwerkstoffen und den erfindungsgemäßen Masseträgern besteht lediglich darin, daß die Fäden des Gitternetzes in erfindungsgemäßer Weise metallisiert sind.

Die Figur 5 zeigt einen Querschnitt durch einen metallisierten Faden (27) des Masseträgers mit dem textilen Kern (28), bestehend aus den in eine Harzmatrix (29) eingebetteten synthetischen Filamenten (30), der darauf liegenden elektrisch leitenden Grundschicht (31), der metallischen Leitschicht (32) und der Titan-Schutzschicht (33).

Wenn der erfindungsgemäße Masseträger zum Aufbau von positiven Elektroden für Bleiakkumulatoren dienen soll, hat es sich ferner als besonders vorteilhaft erwiesen, auf der Ventilmetall-Schicht, vorzugsweise der Titanschicht, eine Bleidioxidschicht zu erzeugen. Diese Schicht stellt eine hervorragende Verbindung zu der aktiven Bleidioxidmasse der positiven Akkumulatorplatte her und bildet darüberhinaus einen zusätzlichen Schutz gegen mechanische und korrosive Beschädigungen der darunterliegenden Metallschichten. Gewünschtenfalls kann als Verbindungsschicht zwischen der Schicht aus Ventilmetall und der PbO₂-Schicht noch eine Bleischicht angeordnet sein. Die Stärke der auf der Ventilmetallschicht, vorzugsweise der Titanschicht, abgeschiedenen Bleidioxidschicht ist unkritisch. Zweckmäßigerweise beträgt sie etwa 10 bis 500 µm.

Soll der erfindungsgemäße titanbeschichtete Masseträger zur Herstellung negativer Elektroden eingesetzt werden, so ist es vorteilhaft, die Beschichtung mit einem Titan auszuführen, das mit geringen Mengen oxydierender Metallionen passiviert wurde.
Derartige Metallionen sind beispielsweise Cu²⁺, Fe³⁺ oder Cr⁴⁺
Zur Herstellung des erfindungsgemäßen Masseträgers ist zunächst der dreidimensional verformte Netzwerkstoff herzustellen.
Hierzu wird das flächenförmige, tiefziehfähige Textilmaterial, in dessen Fäden ggf. Metallfilamente enthalten sind, vorzugsweise die Maschenware, mit einem zur mechanischen Stabilisierung der Verformungen geeigneten obengenannten, ggf. mit einem elektrisch leitfähigen Füller gefüllten, Harz imprägniert. Die Applikation der Harze auf das Textilmaterial kann in üblicher Weise durch Aufstreichen, Bürsten, Rakeln, Pflatschen oder besonders vorteilhaft durch Tauchen erfolgen. Das mit Harz beaufschlagte Gewebe wird anschließend zweckmäßigerweise durch ein Quetschwalzenpaar auf die gewünschte Harzaufnahme abgequetscht.
Thermoplastische Harze werden für den Imprägniervorgang zweckmäßigerweise in Form von Lösungen oder von Emulsionen aufgebracht oder sie werden in Form von Bindefilamenten in das zur Herstellung des tiefziehfähigen Flächengebildes benutzte Garn eingearbeitet. Hitzehärtbare Harze (Duroplaste) werden zweckmäßigerweise in der handelsüblichen Form als hochkonzentrierte wäßrige Lösungen oder Dispersionen eingesetzt.

Nach einer eventuellen Zwischentrocknung des harzimprägnierten Textilmaterials wird es dem flächenvergrößernden Verformungsprozeß, vorzugsweise dem Tiefziehprozeß, bei erhöhter Temperatur unterworfen. Die Temperatur des Tiefziehens wird so gewählt, daß thermoplastische Harze aufgeschmolzen werden können und dabei die Fäden der Netzstruktur vollständig durchdringen. Das Gleiche gilt für Duroplaste; hier wird die Temperatur der Tiefzieheinrichtung so eingestellt, daß der Fließbereich des Duroplasts erreicht wird. Nach dem Schmelzen des Harzes wird die Temperatur der Tiefzieheinrichtung so geregelt, daß das Imprägnierharz erhärten kann. Bei Einsatz von Thermoplasten ist hierzu die Temperatur unter den Schmelzpunkt der Thermoplasten zu reduzieren; bei Duroplasten kann die Temperatur des Tiefziehgerätes in der Regel unverändert bleiben, weil die Aushärtung der Duroplasten auch bei erhöhter Temperatur erfolgt. Die Tiefzieheinrichtung wird so lange geschlossen gehalten, bis das stabilisierende Harz vollständig, oder zumindest soweit erhärtet ist, daß die durch den Verformungsprozess, vorzugsweise das Tiefziehen, erreichte Struktur des Textilmaterials stabil bleibt.
Anstelle der Imprägnierung des tiefziehfähigen Textilmaterials mit thermoplastischem oder duroplastischen Harzen kann auch das unimprägnierte Textilmaterial zusammen mit einer entsprechenden Folie des Harzes gemeinsam verformt werden, wobei die Bedingungen wie oben angegeben zu wählen sind.

Die Harzfolie schmilzt bei diesem Vorgang, wird von den Garnen des Netzwerks aufgesaugt und erhärtet wie oben angegeben.
Das Flächengewicht der Folie wird natürlich so gewählt, daß der oben angegebene Harzanteil von 50 bis 500 g/m² in dem Netzwerkstoff erhalten wird.

Nach der Herstellung des dreidimensional verformten Netzwerkstoffs erfolgt dessen oberflächliche Metallisierung durch elektrolytische Abscheidung einer Metallschicht der für die Leitfähigkeit ausreichenden Dicke.
Sofern der Netzwerkstoff bereits eine Leitfähigkeit hat, z.B. aufgrund von Fasermaterialien, die Metallfilamente enthalten oder aufgrund der Verwendung eines leitfähig gemachten Harzes, die ausreicht, um darauf eine Leitschicht galvanisch abzuscheiden, kann dies ohne weitere Vorbereitungen wie weiter unten angegeben ausgeführt werden.
Besonders bevorzugt ist es jedoch, auf den nicht elektrisch leitfähigen Netzwerkstoff zunächst eine leitfähige Grundschicht aufzutragen.
Hierzu wird er in an sich bekannter Weise durch Aktivieren mit einer Edelmetallionen enthaltenden Lösung oder einem Edelmetallkolloid, gegebenenfalls eine anschließende sogenannte Beschleunigungsbehandlung in einer wäßrigen Säure, wie z.B. Bor-Fluorwasserstoffsäure, Schwefel-, Salz-oder Oxalsäure, für die eigentliche Metallisierung vorbereitet. Danach erfolgt die lückenlose Abscheidung eines Metallüberzugs, wie z.B. eines Kupfer-, Nickel-oder Goldüberzugs auf dem in der oben genannten Weise vorbehandelten Netzwerkstoff. Die Metallabscheidung erfolgt durch Behandeln des vorbereiteten Netzwerkstoffs mit einer die betreffenden Metallionen und ein Reduktionsmittel - in der Praxis wird meist Formaldehyd, ein Hypophosphit oder ein Alkaliboranat eingesetzt - enthaltenden wäßrigen Lösung.
In speziellen Fällen, z.B. wenn die Kunststoffoberfläche der Netzwerkfäden es verlangt oder besonders hohe Anforderungen an die Haftfestigkeit des Metallüberzugs gestellt werden, ist es zweckmäßig, den Netzwerkstoff vor dem Aktivieren durch Behandlung mit einem Quellmittel, wie z.B. Aceton, Ethylacetat, Trichloraceton oder Trichloressigsäure, und Beizen mit einer wäßrigen, üblicherweise 300 bis 900 g/l Chromsäure und gegebenenfalls Schwefelsäure enthaltenden Lösung, auf die Aktivierung vorzubereiten. Es ist besonders überraschend, daß in der Regel bei der Metallisierung der Netzwerkstoffe auf diese Quell- und Beizbehandlung verzichtet werden kann.

Vorzugsweise erfolgt vor der Aktivierung (Bekeimung) des Netzwerkstoffs eine gründliche Oberflächenreinigung. Diese kann z.B. durch eine Behandlung mit einer wäßrigen alkalischen Tensidlösung, z.B. mit einem handelsüblichen sogenannten Konditionierungsmittel, erfolgen. Als besonders zweckmäßig hat sich eine Reinigungsbehandlung in einem warmen (40 - 70°C) Wasserbad unter Einwirkung von Ultraschall erwiesen. Hierbei ist der Einsatz von entionisiertem Wasser besonders empfehlenswert.

Anstelle dieser chemischen Abscheidung eines Metallfilms kann auch eine Bedampfung des dreidimensional verformten Netzwerkstoffs im Hochvakuum oder durch Kathodenzerstäubung (Sputtern) mit dem gewünschten Metall erfolgen, wobei darauf zu achten ist, daß die gesamte Oberfläche des Netzwerkstoffs lückenlos bedampft wird, da nur so eine lückenlose galvanische Abscheidung der Leitschicht erfolgen kann.

Die Abscheidung der Metallschicht als elektrisch leitende Grundschicht kann ganz unterbleiben, wenn der Netzwerkstoff, z.B. nach dem in DE-A-33 21 281 oder EP-A-0 206 133 beschriebenen Verfahren mit einer Schicht eines elektrisch leitfähigen Polymers, z.B. gemäß EP-A-0 206 133, Beispiel 1, mit einer Schicht von Polypyrrol überzogen oder wenn eine lückenlose Schicht von anderen elektrisch leitfähigen Substanzen, wie leitfähigem Ruß (Kohlenstoff), Graphit oder Metallpulver, die auch harzgebunden sein können, aufgebracht wird.

Anschließend wird auf der relativ dünnen elektrisch leitenden Grundschicht, bestehend aus einer chemisch abgeschiedenen Metallschicht oder Polymerschicht, z.B. der Polypyrrolschicht, die 5 bis 300 µm dicke Leitschicht aus dem gleichen oder einem anderen Metall in an sich bekannter Weise elektrolytisch abgeschieden.

Die Metallisierung des Netzwerkstoffs kann auch bis zu der gewünschten Stärke der Leitschicht ausschließlich durch die oben beschriebene chemische Metallabscheidung erfolgen. Dabei hängt die Stärke der Metallschicht naturgemäß von der Expositionszeit des Netzwerkstoffs in dem Metallisierungsbad ab. In der Regel können pro Stunde ca 2 - 6 µm Metallfilm abgeschieden werden.

Bevorzugt ist jedoch die chemische Erzeugung eines Metallfilms aus Kupfer oder Nickel in einer Stärke von 0,5 bis 2µm und anschließende elektrolytische Metallisierung z.B. mit Chrom, Kupfer, Nickel, Blei, Blei/Zinn, Zinn, oder Gold, vorzugsweise mit Kupfer, bis zu einer Stärke des die Leitschicht bildenden Metallüberzugs von bis zu 300, vorzugsweise 10 bis 100 µm.
Besonders bevorzugt ist bei der kombinierten chemischen und elektrolytischen Metallisierung die chemische Abscheidung eines Kupferfilms, weil dieser sehr duktil ist und eine besonders leicht zu aktivierende Oberfläche hat.

Nach der vorzugsweise galvanischen Erzeugung der Leitschicht wird auf diese erfindungsgemäß der Überzug aus dem Ventilmetall, vorzugsweise der Titanüberzug, in einer Stärke von mindestens 0,01 µm, vorzugsweise von 0,03 bis 0,1 µm, aufgebracht.
Der Auftrag der Ventilmetall-Schicht, vorzugsweise der Titanschicht, kann durch Aufdampfen im Hochvakuum bei unter 10⁻⁴ mbar erfolgen, wenn die bekannten Bedingungen für eine lückenlose, gleichmäßige Abscheidung des Metallfilms auf dem Netzwerk beachtet werden.
Viel günstiger, weil der Netzwerkstruktur besser angepaßt, ist der lückenlose Auftrag des Ventilmetallfilms, vozugsweise des Titanfilms, durch Ionenplattierung in Inertgas, weil sowohl die Ladung des auf negativem Potential liegenden Substrats als auch der im Plasma herrschende höhere Gasdruck von 10⁻² bis 10⁻³ mbar (kürzere freie Weglänge der Metallionen) eine gleichmäßigere Abscheidung des Metallfilms auf dem Netzwerk herbeiführen.

Besonders bevorzugt ist es, den Ventilmetallfilm, vorzugsweise den Titanfilm, durch Kathodenzerstäubung (Sputtern) in Inertgas zu erzeugen, weil auch hier das elektrische Feld und der etwas höhere Gasdruck zu einem gleichmäßigen Auftrag der Titanschicht führen. Hinzu kommt der relativ schnelle Aufbau der benötigten Schichtdicke. Eine gute Übersicht über die hier aufgezeigten bekannten Möglichkeiten zur Erzeugung der Ventilmetallschicht, vorzugsweise der Titanschicht, des erfindungsgemäßen Masseträgers findet sich z.B. in "Ullmanns Encyklopädie der technischen Chemie", 4.Auflage, Band 10, Seiten 257 ff., insbesondere Seiten 257-260, mit Hinweisen auf weiterführende Literatur und Primärliteratur.

Die Passivierung der Ventilmetallschicht, z.B. der Titanschicht, erfolgt vorzugsweise durch galvanische Oxydation und kann beim Einbau des Masseträgers in eine positive Platte gleichzeitig mit deren Formatierung erfolgen.

Eine ggf. gewünschte, zusätzliche Schicht aus PbO₂ kann auf der Ventilmetall-Schicht, z.B. der Titanschicht, beispielsweise dadurch erzeugt werden, daß auf die Ventilmetallschicht, z.B. die Titanschicht, eine dünne Bleischicht, z.B. durch kurzes Eintauchen in eine Bleischmelze, durch Aufspritzen oder auch durch Kathodenzerstäubung (Sputtern), aufgetragen wird und anschließend die Bleischicht vollständig oder teilweise anodisch zu PbO₂ oxydiert wird. Auch die anodische Oxydation der Bleischicht kann gleichzeitig mit der Formatierung der Platte erfolgen.

Weitere Möglichkeiten zur Aufbringung der PbO₂-Schicht bestehen in der elektrolytischen Abscheidung von PbO₂ aus einer Alkaliplumbat-(II)-Lösung oder aus einer Harnstoff und Kupfernitrat enthaltenden wässrigen Lösung von Bleinitrat.

Ein weiterer Gegenstand der vorliegenden Erfindung sind Elektroden, insbesondere Positivelektroden für galvanische Primär- und Sekundärelemente, die sich dadurch auszeichnen, daß sie einen der oben beschriebenen Masseträger aufweisen.

Besonders bevorzugt sind Positivelektroden für Bleiakkumulatoren, die einen erfindungsgemäßen Masseträger aufweisen.

Zur Herstellung der erfindungsgemäßen Elektroden wird zunächst ein passender Zuschnitt des erfindungsgemäßen Massenträgers mit Stromzu- bzw. - ableitungen und ggf. einem leitfähigen Rahmen versehen. Dann wird üblicherweise eine Paste aus Bleipulver, Bleioxidpulver und verdünnter Schwefelsäure, ggf. noch mit in Massen für Positivplatten üblichen Hilfsstoffen und Zusätzen, wie z.B. Faserkurzschnitt, versetzt, in das Skelett des erfindungsgemäßen Massenträgers eingebracht. Hierzu sind sämtliche mit einer pasten- bzw. salbenartigen Konsistenz herstellbare Massen geeignet. Insbesondere bei der Herstellung von Elektroden für Bleiakkumulatoren kann mit einer Masse der Dichte 3 bis 5,7 g/ml gearbeitet werden. Die Paste kann entweder von Hand oder maschinell eingestrichen werden. Zur Verbesserung der Masseverteilung ist die Verwendung von Ultraschall zur zwischenzeitlichen Verflüssigung der Masse möglich.

Insbesondere bei dichten und/oder in zwei Richtungen tiefgezogenen Netzwerken ist eine doppelseitige Pastierung von Vorteil, um eine vollständige Einhüllung aller Netzwerkteile zu erreichen. Desweiteren kann eine vollständige Umhüllung eines dichten Netzwerkes durch Verwendung von dünnflüssigeren Mischungen und anschließendem Abpressen mit einem saugfähigen Vliesmaterial, welches später in der fertigen Zelle als Säurereservoir verwendet werden kann, erfolgen.

Nach dem Einstreichen der aktiven Masse in den erfindungsgemäßen Masseträger wird die Elektrode zur Reifung einige Zeit, z.B. einige Stunden oder wenige Tage, gelagert und anschließend durch mehrmaliges Laden und Entladen, wobei sie als positive Elektrode geschaltet wird, formatiert.

Durch den erfindungsgemäßen Aufbau der Elektroden wird im wesentlichen erreicht, daß sie ein geringeres Gewicht, eine höhere Leistung und eine höhere mechanische Festigkeit aufweisen. Das geringere Gewicht gegenüber bekannten Ausführungen kommt dadurch zustande, daß der leitfähige Netzwerkstoff als Trägermaterial hauptsächlich aus synthetischen Fäden und Harzen mit einer nur dünnen Schicht aus Metallen besteht. In der bevorzugten Ausführungsform besteht das Fadenmaterial aus Polyester mit einem spezifischen Gewicht von ca. 1,4 g/cm³. Das vorzugsweise zur Anwendung kommende Harz hat eine Dichte von ca. 1,4 g/cm³. Demgegenüber hat Blei ein spezifisches Gewicht von 11,3/cm³, und ein Bleigitter als Träger für die aktive Masse hat z.B. bei einer Starterbatterie ein Gewicht von 90 Gramm. Besteht der Träger für die aktive Masse aus dem oben beschriebenen Netzwerkstoff, so kann durch Gewichtseinsparung eine 88 Ah Starterbatterie um ein bis zwei Kilogramm leichter gebaut werden.
Bei einer Starterbatterie ist die Startleistung, d.h. die Hochstromentladefähigkeit der Batterie von entscheidender Bedeutung. Für diese Leistung ist der innere Widerstand der Batterie von ausschlaggebender Bedeutung, der wiederum von der Plattendicke abhängt, welche unter Verwendung von Netzwerkstoffen nicht mehr den gießtechnischen Beschränkungen eines bisher üblichen Gitters unterworfen ist. Da außerdem die aktive Masse von der filigranen Struktur des Netzwerkes skelettartig durchdrungen wird, liegt zusätzlich zum erniedrigten Innenwiderstand eine verbesserte Querstromverteilung und damit eine bessere Masseausnutzung vor.

Durch den verminderten Spannungsabfall in der Zelle nimmt auch die unerwünschte Verlustwärmeentwicklung ab. Dies wirkt sich günstig auf die Lebensdauer der Batterie aus.
Insgesamt bringt die Verwendung des leitfähigen Kunststoff-Netzwerkstoffes eine größere Energiedichte, bezogen auf das Gewicht gegenüber herkömmlichen Bauarten von z.B. Blei/Säure-Ni/Cd- oder Ni/Fe-Zellen.

Gegenüber konventionellen Elektrodenplatten haben solche aus Netzwerkstoffen auch den Vorteil einer größeren mechanischen Stabilität. Aufgrund seiner Struktur trägt der Netzwerkstoff nicht nur die aktive Masse, sondern er durchdringt sie räumlich wie ein Skelett und armiert sie auf diese Weise und stabilisiert sie gegen Schlag- und Stoßbelastung sowie gegen Verformung beim Erwärmen. Dies wiederum vermindert die Gefahr, daß die aktive Masse vom Träger abfällt und sich als Schlamm auf dem Boden der Batterie ansammelt und die Leistung der Batterie vermindert oder sie unbrauchbar macht.

## Patentansprüche

1. Massenträger für Elektroden galvanischer Primär- oder Sekundärelemente aus einer maschenoffenen, dreidimensionalen Netzwerkstruktur aus mit einer oder mehreren gut leitenden, dünnen Metallschichten lückenlos überzogenen Kunststoffäden, der zur Ausbildung der dreidimensionalen Struktur mit über seiner Fläche verteilten buckelartigen Vertiefungen und/oder Erhöhungen versehen ist, in deren Bereich der Abstand zwischen den Kunststoffäden vergrößert ist, dadurch gekennzeichnet, daß zumindest die äußere Metallschicht der Kunststoffäden aus einem Ventilmetall besteht.

2. Massenträger gemäß Anspruch 1, dadurch gekennzeichnet, daß die maschenoffene Netzwerkstruktur aus einer durch einen flächenvergrößernden, maschenöffnenden Verformungsprozeß dreidimensional verformten Textilfläche besteht.

3. Massenträger gemäß mindestens einem der Ansprüche 1 und 2, dadurch gekennzeichnet, daß die maschenoffene Netzwerkstruktur aus einer durch Tiefziehen dreidimensional verformten Textilfläche besteht.

4. Massenträger gemäß mindestens einem der Ansprüche 1 bis 3, dadurch gekennzeichnet, daß die Netzwerkstruktur mit einem Thermo- oder Duroplasten formstabilisiert ist.

5. Massenträger gemäß mindestens einem der Ansprüche 1 bis 4, dadurch gekennzeichnet, daß die Netzwerkstruktur mit einer Leitschicht aus einer oder mehreren elektrisch gut leitenden Metallschichten überzogen ist, auf der als äußere Metallschicht eine Ventilmetall-Schicht aufgebracht ist.

6. Massenträger gemäß mindestens einem der Ansprüche 1 bis 5, dadurch gekennzeichnet, daß die Leitschicht eine Kupferschicht ist.

7. Massenträger gemäß mindestens einem der Ansprüche 1 bis 6, dadurch gekennzeichnet, daß das Ventilmetall Titan ist.

8. Massenträger gemäß mindestens einem der Ansprüche 1 bis 7, dadurch gekennzeichnet, daß zwischen dem Kunststoff der Netzwerkstruktur und der Leitschicht eine elektrisch leitende Grundschicht aus stromlos abgeschiedenen Metallen, vorzugsweise aus Kupfer, Nickel oder einem Edelmetall oder aus einem elektrisch leitfähigen Polymer vorhanden ist.

9. Massenträger gemäß mindestens einem der Ansprüche 1 bis 8, dadurch gekennzeichnet, daß zwischen dem Kunststoff der Netzwerkstruktur und der Leitschicht eine elektrisch leitende Grundschicht aus Polypyrrol vorhanden ist.

10. Massenträger gemäß mindestens einem der Ansprüche 1 bis 7, dadurch gekennzeichnet, daß zwischen dem Kunststoff der Netzwerkstruktur und der Leitschicht eine elektrisch leitende Grundschicht aus leitfähigem Ruß (Kohlenstoff), Graphit oder Metallpulvern, die auch harzgebunden sein können, vorhanden ist.

11. Massenträger gemäß mindestens einem der Ansprüche 1 bis 10, dadurch gekennzeichnet, daß die Ventilmetall-Schicht eine Schichtdicke von > 0,01 µm, vorzugsweise von > 0,03 µm, insbesondere von 0,03 bis 0,1 µm, hat.

12. Massenträger gemäß mindestens einem der Ansprüche 1 bis 11, dadurch gekennzeichnet, daß die Ventilmetall-Schicht passiviert ist.

13. Massenträger gemäß mindestens einem der Ansprüche 1 bis 12, dadurch gekennzeichnet, daß die Ventilmetall-Schicht galvanisch passiviert ist.

14. Massenträger gemäß mindestens einem der Ansprüche 1 bis 13, dadurch gekennzeichnet, daß die Ventilmetall-Schicht zusätzlich mit einer Schicht aus PbO₂ überzogen ist.

15. Massenträger gemäß mindestens einem der Ansprüche 1 bis 14, dadurch gekennzeichnet, daß zwischen der Ventilmetall-Schicht und der PbO₂-Schicht eine Bleischicht vorhanden ist.

16. Elektrode für galvanische Primär- oder Sekundärelemente aus einem Träger und einer aktiven Masse, deren Träger aus einer maschenoffenen, dreidimensionalen Netzwerkstruktur aus mit einer oder mehreren gut leitenden, dünnen Metallschichten lückenlos überzogenen Kunststoffäden besteht, der zur Ausbildung der dreidimensionalen Struktur mit über seine Fläche verteilten buckelartigen Vertiefungen und/oder Erhöhungen versehen ist, in deren Bereich der Abstand zwischen den Kunststoffäden vergrößert ist, der die aktive Masse skelettartig durchsetzt, dadurch gekennzeichnet, daß zumindest die äußere Metallschicht der Kunststoffäden aus einem Ventilmetall besteht.

17. Elektrode gemäß Anspruch 16, dadurch gekennzeichnet, daß die maschenoffene Netzwerkstruktur des Trägers aus einer durch einen flächenvergrößernden Verformungsprozeß dreidimensional verformten Textilfläche besteht.

18. Elektrode gemäß mindestens einem der Ansprüche 16 und 17, dadurch gekennzeichnet, daß die maschenoffene Netzwerkstruktur mit einem Thermo- oder Duroplasten formstabilisiert ist.

19. Elektrode gemäß mindestens einem der Ansprüche 16 bis 18, dadurch gekennzeichnet, daß die maschenoffene Netzwerkstruktur des Trägers mit einer Leitschicht aus einer oder mehreren elektrisch gut leitenden Metallschichten überzogen ist, auf der als äußere Metallschicht eine Ventilmetall-Schicht aufgebracht ist.

20. Elektrode gemäß mindestens einem der Ansprüche 16 bis 19, dadurch gekennzeichnet, daß die Leitschicht eine Kupferschicht ist.

21. Elektrode gemäß mindestens einem der Ansprüche 16 bis 20, dadurch gekennzeichnet, daß das Ventilmetall Titan ist.

22. Elektrode gemäß mindestens einem der Ansprüche 16 bis 21, dadurch gekennzeichnet, daß zwischen dem Kunststoff der Netzwerkstruktur und der Leitschicht eine elektrisch leitende Grundschicht aus stromlos abgeschiedenen Metallen, vorzugsweise aus Kupfer, Nickel oder einem Edelmetall oder aus einem elektrisch leitfähigen Polymer vorhanden ist.

23. Elektrode gemäß mindestens einem der Ansprüche 16 bis 22, dadurch gekennzeichnet, daß zwischen dem Kunststoff der Netzwerkstruktur und der Leitschicht eine elektrisch leitende Grundschicht aus Polypyrrol vorhanden ist.

24. Elektrode gemäß mindestens einem der Ansprüche 16 bis 21, dadurch gekennzeichnet, daß zwischen dem Kunststoff der Netzwerkstruktur und der Leitschicht eine elektrisch leitende Grundschicht aus leitfähigem Ruß (Kohlenstoff), Graphit oder Metallpulvern, die auch harzgebunden sein können, vorhanden ist.

25. Elektrode gemäß mindestens einem der Ansprüche 16 bis 24, dadurch gekennzeichnet, daß die Ventilmetall-Schicht eine Schichtdicke von > 0,01 µm, vorzugsweise von > 0,03 µm, insbesondere von 0,03 bis 0,1 µm, hat.

26. Elektrode gemäß mindestens einem der Ansprüche 16 bis 25, dadurch gekennzeichnet, daß die Ventilmetall-Schicht passiviert ist.

27. Elektrode gemäß mindestens einem der Ansprüche 16 bis 26, dadurch gekennzeichnet, daß die Ventilmetall-Schicht galvanisch passiviert ist.

28. Elektrode gemäß mindestens einem der Ansprüche 16 bis 27, dadurch gekennzeichnet, daß es die positive Elektrode eines Primär- oder Sekundärelements ist.

29. Elektrode gemäß mindestens einem der Ansprüche 16 bis 28, dadurch gekennzeichnet, daß es die positive Elektrode eines Bleiakkumulators ist.

30. Elektrode gemäß mindestens einem der Ansprüche 16 bis 29, dadurch gekennzeichnet, daß die Ventilmetall-Schicht zusätzlich mit einer Schicht aus PbO₂ überzogen ist.

31. Elektrode gemäß mindestens einem der Ansprüche 16 bis 30, dadurch gekennzeichnet, daß zwischen der Ventilmetall-Schicht und der PbO₂-Schicht eine Bleischicht vorhanden ist.

32. Verfahren zur Herstellung eines Masseträgers für Elektroden galvanischer Primär- und Sekundärelemente durch Imprägnieren eines flächenförmigen, tiefziehfähigen, ggf. elektrisch leitfähigen Textilmaterials, mit einem zur mechanischen Stabilisierung der Verformungen geeigneten, ggf. mit einem elektrisch leitfähigen Füller gefüllten, Harz, ggf. Zwischentrocknung des harzimprägnierten Textilmaterials, Verformung des harzimprägnierten Textilmaterials zu einer dreidimensionalen Struktur mit über seine Fläche verteilten buckelartigen Vertiefungen und/oder Erhöhungen versehen ist, in deren Bereich der Abstand zwischen den Kunststoffäden vergrößert ist, durch einen flächenvergrößernden Verformungsprozeß bei erhöhter Temperatur, bei der die Harze schmelzen, wobei anschließend die Temperatur der Verformungsvorrichtung so geregelt wird, daß das Imprägnierharz erhärten kann, anschließende Metallisierung des so erhaltenen dreidimensional verformten Netzwerkstoffs durch
a) erforderlichenfalls Aufbringen einer elektrisch leitenden Grundschicht aus Metall oder auch aus einer Schicht anderer elektrisch leitfähiger Substanzen und
b) elektrolytische Abscheidung einer 5 bis 300 µm dicken Metallschicht als Leitschicht,
dadurch gekennzeichnet, daß das anschließend auf die metallische Leitschicht eine Ventilmetall-Schicht in einer Stärke von mindestens 0,01 µm, vorzugsweise von 0,03 bis 0,1 µm, aufgebracht wird.

33. Verfahren gemäß Anspruch 32, dadurch gekennzeichnet, daß eine Maschenware dem flächenvergrößernden Verformungsprozeß unterworfen wird.

34. Verfahren gemäß mindestens einem der Ansprüche 32 und 33, dadurch gekennzeichnet, daß zwischen dem Kunststoff der Netzwerkstruktur und der Leitschicht eine elektrisch leitende Grundschicht aus stromlos abgeschiedenen Metallen, vorzugsweise aus Kupfer, Nickel oder einem Edelmetall oder aus einem elektrisch leitfähigen Polymer aufgebracht wird.

35. Verfahren gemäß mindestens einem der Ansprüche 32 bis 34, dadurch gekennzeichnet, daß zwischen dem Kunststoff der Netzwerkstruktur und der Leitschicht eine elektrisch leitende Grundschicht aus Polypyrrol aufgebracht wird.

36. Verfahren gemäß mindestens einem der Ansprüche 32 bis 33, dadurch gekennzeichnet, daß als elektrisch leitfähige Grundschicht eine Schicht aus leitfähigem Ruß (Kohlenstoff), Graphit oder Metallpulvern, die auch harzgebunden sein können, aufgebracht wird.

37. Verfahren gemäß mindestens einem der Ansprüche 32 bis 36, dadurch gekennzeichnet, daß als Ventilmetall-Schicht eine Titanschicht aufgebracht wird.

38. Verfahren gemäß mindestens einem der Ansprüche 32 bis 37, dadurch gekennzeichnet, daß die Ventilmetall-Schicht in einem elektrisch erzeugten Plasma lückenlos auf das Trägernetzwerk aufgebracht wird.

39. Verfahren gemäß mindestens einem der Ansprüche 32 bis 38, dadurch gekennzeichnet, daß die Ventilmetall-Schicht durch Ionenplattierung, Kathodenzerstäubung (Sputtern) in Inertgas oder durch Aufdampfen im Hochvakuum aufgetragen wird.

40. Verfahren gemäß mindestens einem der Ansprüche 32 bis 39, dadurch gekennzeichnet, daß die Ventilmetall-Schicht galvanisch passiviert wird.

41. Verfahren gemäß mindestens einem der Ansprüche 32 bis 40, dadurch gekennzeichnet, daß auf der Ventilmetall-Schicht PbO₂ elektrolytisch abgeschieden wird.

42. Verfahren gemäß mindestens einem der Ansprüche 32 bis 41, dadurch gekennzeichnet, daß zwischen der Ventilmetall-Schicht und der PbO₂-Schicht eine Bleischicht eingebracht wird.

43. Verfahren gemäß mindestens einem der Ansprüche 32 bis 42, dadurch gekennzeichnet, daß die Abscheidung der PbO₂-Schicht und die Passivierung der Ventilmetall-Schicht gleichzeitig erfolgen.

## Claims

1. A composition support for electrodes of primary or secondary electrochemical cells, comprising an open-mesh, three-dimensional network structure of polymer threads coated without gaps with one or more readily conductive, thin metal layers, which support is, to form the three-dimensional structure, provided with corrugation-like depressions and/or prominences distributed over its area, in the region of which depressions and/or prominences the distance between the polymer threads is increased, wherein at least the outer metal layer of the polymer threads comprises a valve metal.

2. A composition support as claimed in claim 1, wherein the open-mesh network structure comprises a textile sheet which has been three-dimensionally shaped by an area-increasing, mesh-opening forming process.

3. A composition support as claimed in at least one of claims 1 and 2, wherein the open-mesh network structure comprises a textile sheet which has been three-dimensionally shaped by deep drawing.

4. A composition support as claimed in at least one of claims 1 to 3, wherein the network structure has its shape stabilized by means of a thermoplastic or thermoset polymer.

5. A composition support as claimed in at least one of claims 1 to 4, wherein the network structure is coated with a conductive layer comprising one or more metal layers which have good electric conductivity and the conductive layer has a valve metal layer applied to it as outer metal layer.

6. A composition support as claimed in at least one of claims 1 to 5, wherein the conductive layer is a copper layer.

7. A composition support as claimed in at least one of claims 1 to 6, wherein the valve metal is titanium.

8. A composition support as claimed in at least one of claims 1 to 7, wherein an electrically conductive base layer of metals deposited by electroless methods, preferably copper, nickel or a noble metal, or of an electrically conductive polymer is present between the polymer of the network structure and the conductive layer.

9. A composition support as claimed in at least one of claims 1 to 8, wherein an electrically conductive base layer of polypyrrole is present between the polymer of the network structure and the conductive layer.

10. A composition support as claimed in at least one of claims 1 to 7, wherein an electrically conductive base layer of conductive carbon black, graphite or metal powders, which may also be resin-bonded, is present between the polymer of the network structure and the conductive layer.

11. A composition support as claimed in at least one of claims 1 to 10, wherein the valve metal layer has a thickness of > 0.01 µm, preferably > 0.03 µm, in particular from 0.03 to 0.1 µm.

12. A composition support as claimed in at least one of claims 1 to 11, wherein the valve metal layer has been passivated.

13. A composition support as claimed in at least one of claims 1 to 12, wherein the valve metal layer has been passivated electrochemically.

14. A composition support as claimed in at least one of claims 1 to 13, wherein the valve metal layer is additionally coated with a layer of PbO₂.

15. A composition support as claimed in at least one of claims 1 to 14, wherein a lead layer is present between the valve metal layer and the PbO₂ layer.

16. An electrode for primary or secondary electrochemical cells, comprising a support and an active composition, whose support comprises an open-mesh, three-dimensional network structure of polymer threads coated without gaps with one or more readily conductive, thin metal layers, which support is, to form the three-dimensional structure, provided with corrugation-like depressions and/or prominences distributed over its area, in the region of which depressions and/or prominences the distance between the polymer threads is increased, and which support runs through the active composition in a skeletonlike manner, wherein at least the outer metal layer of the polymer threads comprises a valve metal.

17. An electrode as claimed in claim 16, wherein the open-mesh network structure of the support comprises a textile sheet which has been three-dimensionally shaped by means of an area-increasing forming process.

18. An electrode as claimed in at least one of claims 16 and 17, wherein the open-mesh network structure has its shape stabilized by means of a thermoplastic or thermoset polymer.

19. An electrode as claimed in at least one of claims 16 to 18, wherein the open-mesh network structure of the support is coated with a conductive layer comprising one or more metal layers which have good electric conductivity and the conductive layer has a valve metal layer applied to it as outer metal layer.

20. An electrode as claimed in at least one of claims 16 to 19, wherein the conductive layer is a copper layer.

21. An electrode as claimed in at least one of claims 16 to 20, wherein the valve metal is titanium.

22. An electrode as claimed in at least one of claims 16 to 21, wherein an electrically conductive base layer of metals deposited by electroless methods, preferably copper, nickel or a noble metal, or of an electrically conductive polymer is present between the polymer of the network structure and the conductive layer.

23. An electrode as claimed in at least one of claims 16 to 22, wherein an electrically conductive base layer of polypyrrole is present between the polymer of the network structure and the conductive layer.

24. An electrode as claimed in at least one of claims 16 to 21, wherein an electrically conductive base layer of conductive carbon black, graphite or metal powders, which may also be resin-bonded, is present between the polymer of the network structure and the conductive layer.

25. An electrode as claimed in at least one of claims 16 to 24, wherein the valve metal layer has a thickness of > 0.01 µm, preferably > 0.03 µm, in particular from 0.03 to 0.1 µm.

26. An electrode as claimed in at least one of claims 16 to 25, wherein the valve metal layer has been passivated.

27. An electrode as claimed in at least one of claims 16 to 26, wherein the valve metal layer has been passivated electrochemically.

28. An electrode as claimed in at least one of claims 16 to 27 which is the positive electrode of a primary or secondary cell.

29. An electrode as claimed in at least one of claims 16 to 28 which is the positive electrode of a lead accumulator.

30. An electrode as claimed in at least one of claims 16 to 29, wherein the valve metal layer is additionally coated with a layer of PbO₂.

31. An electrode as claimed in at least one of claims 16 to 30, wherein a lead layer is present between the valve metal layer and the PbO₂ layer.

32. A process for producing a composition support for electrodes of primary and secondary electrochemical cells by impregnating a sheet-like, deep-drawable, possible electrically conductive textile material with a resin which is suitable for mechanically stabilizing the induced shape and may, if desired, be filled with an electrically conductive filler, if desired carrying out intermediate drying of the resin-impregnated textile material, shaping the resin-impregnated textile material to form a three-dimensional structure provided with corrugation-like depressions and/or prominences distributed over its area, in the region of which depressions and/or prominences the distance between the polymer threads is increased, by means of an area-increasing forming process at an elevated temperature at which the resins melt, where the temperature of the forming apparatus is subsequently regulated so that the impregnation resin can cure, subsequently metalizing the resulting three-dimensionally shaped network material by
a) if necessary, applying an electrically conductive base layer of metal or else of a layer of other electrically conductive substances and
b) electrolytically depositing a 5-300 µm thick metal layer as conductive layer,
wherein a valve metal layer having a thickness of at least 0.01 µm, preferably from 0.03 to 0.1 µm, is subsequently applied to the metallic conductive layer.

33. The process as claimed in claim 32, wherein a mesh material is subjected to the area-increasing forming process.

34. The process as claimed in at least one of claims 32 and 33, wherein an electrically conductive base layer of metals deposited by electroless methods, preferably copper, nickel or a noble metal, or of an electrically conductive polymer is applied between the polymer of the network structure and the conductive layer.

35. The process as claimed in at least one of claims 32 to 34, wherein an electrically conductive base layer of polypyrrole is applied between the polymer of the network structure and the conductive layer.

36. The process as claimed in at least one of claims 32 and 33, wherein the electrically conductive base layer applied is a layer of conductive carbon black, graphite of metal powders, which may also be resin-bonded.

37. The process as claimed in at least one of claims 32 to 36, wherein the valve metal layer applied is a titanium layer.

38. The process as claimed in at least one of claims 32 to 37, wherein the valve metal layer is applied without gaps to the support network in an electrically generated plasma.

39. The process as claimed in at least one of claims 32 to 38, wherein the valve metal layer is applied by ion plating, cathode atomization (sputtering) in inert gas or by vapor deposition in a high vacuum.

40. The process as claimed in at least one of claims 23 to 39, wherein the valve metal layer is passivated electrochemically.

41. The process as claimed in at least one of claims 32 to 40, wherein PbO₂ is deposited electrolytically on the valve metal layer.

42. The process as claimed in at least one of claims 32 to 41, wherein a lead layer is introduced between the valve metal layer and the PbO₂ layer.

43. The process as claimed in at least one of claims 32 to 42, wherein the deposition of the PbO₂ layer and the passivation of the valve metal layer are carried out simultaneously.

## Revendications

1. Support de masse pour des électrodes d'éléments galvaniques primaires ou secondaires, constitué par une structure tridimensionnelle de réseau à mailles ouvertes comprenant des fils de matière plastique qui sont recouverts, sans discontinuité, par une ou plusieurs couches métalliques minces qui sont bien conductrice, ce support comprenant, pour la formation de la structure tridimensionnelle, des renfoncements et/ou des bossages en forme de bombement, qui sont répartis sur sa surface et dans la zone desquels la distance entre les fils de matière plastique est accrue, caractérisé en ce qu'au moins la couche métallique extérieure des fils de matière plastique est formée d'un métal pour soupapes.

2. Support de masse selon la revendication 1, caractérisé en ce que la structure de réseau à mailles ouvertes est constituée par une surface textile déformée de façon tridimensionnelle au moyen d'un processus de déformation qui augmente la surface et ouvre les mailles.

3. Support de masse selon au moins l'une des revendications 1 et 2, caractérisé en ce que la structure de réseau à mailles ouvertes est constituée par une surface textile déformée d'une manière tridimensionnelle par emboutissage.

4. Support de masse selon au moins l'une des revendications 1 à 3, caractérisé en ce que la forme de structure de réseau est stabilisée au moyen d'une matière thermoplastique ou d'une matière plastique thermodurcissable.

5. Support de masse selon au moins l'une des revendications 1 à 4, caractérisé en ce que la structure de réseau est recouverte par une couche conductrice formée d'une ou de plusieurs couches métalliques conduisant bien le courant électrique et sur laquelle est déposée, en tant que couche métallique supérieure, une couche d'un métal pour soupapes.

6. Support de masse selon au moins l'une des revendications 1 à 5, caractérisé en ce que la couche conductrice est une couche de cuivre.

7. Support de masse selon au moins l'une des revendications 1 à 6, caractérisé en ce que le métal pour soupapes est du titane.

8. Support de masse selon au moins l'une des revendications 1 à 7, caractérisé en ce qu'entre la matière plastique de la structure de réseau et la couche conductrice est présente une couche de base électriquement conductrice formée par des métaux déposés de façon autocatalytique, de préférence du cuivre, du nickel ou un métal précieux, ou par un polymère électriquement conducteur.

9. Support de masse selon au moins l'une des revendications 1 à 8, caractérisé en ce qu'entre la matière plastique de la structure de réseau et la couche conductrice est présente une couche de base électriquement conductrice en polypyrrol.

10. Support de masse selon au moins l'un des revendications 1 à 7, caractérisé en ce qu'entre la matière plastique de la structure de réseau et la couche conductrice est présente une couche de base électriquement conductrice formée de suie conductrice (carbone), de graphite ou de poudres métalliques, qui peuvent être également liées par une résine.

11. Support de masse selon au moins l'une des revendications 1 à 10, caractérisé en ce que la couche de métal pour soupapes possède une épaisseur > 0,01 µm de préférence > 0,03 µm, et notamment comprise entre 0,03 et 0,1 µm.

12. Support de masse selon au moins l'une des revendications 1 à 11, caractérisé en ce que la couche de métal pour soupapes est passivée.

13. Support de masse selon au moins l'une des revendications 1 à 12, caractérisé en ce que la couche de métal pour soupapes est passivée par voie galvanique.

14. Support de masse selon au moins l'une des revendications 1 à 13, caractérisé en ce que la couche de métal pour soupapes est en outre recouverte d'une couche de PbO₂.

15. Support de masse selon au moins l'une des revendications 1 à 14, caractérisé en ce qu'une couche de plomb est prévue entre la couche de métal pour soupapes et la couche de PbO₂.

16. Electrode d'éléments galvaniques primaires ou secondaires, constitué par une structure tridimensionnelle de réseau à mailles ouvertes comprenant des fils de matière plastique qui sont recouverts, sans discontinuité, par une ou plusieurs couches métalliques minces qui sont bien conductrices, ce support comprenant, pour la formation de la structure tridimensionnelle, des renfoncements et/ou des bossages en forme de bombement, qui sont répartis sur sa surface et dans la zone desquels la distance entre les fils de matière plastique est accrue, qui traversent à la manière d'un squelette la masse active, caractérisée en ce qu'au moins la couche métallique extérieure des fils de matière plastique est constituée par un métal pour soupapes.

17. Electrode selon la revendication 16, caractérisée en ce que la structure de réseau à mailles ouvertes, du support est constituée par une surface textile déformée de façon tridimensionnelle au moyen d'un processus de déformation qui augmente la surface et ouvre les mailles.

18. Electrode selon au moins l'une des revendications 16 et 17, caractérisée en ce que la forme de structure de réseau est stabilisée au moyen d'une matière thermoplastique ou d'une matière plastique thermodurcissable.

19. Electrode selon au moins l'une des revendications 16 à 18, caractérisée en ce que la structure de réseau à mailles ouvertes du support est recouverte par une couche conductrice formée d'une ou de plusieurs couches métalliques conduisant bien l'électricité et sur lesquelles une couche de métal pour soupapes est déposée en tant que couche métallique extérieure.

20. Electrode selon au moins l'une des revendications 16 à 19, caractérisée en ce que la couche conductrice est une couche de cuivre.

21. Electrode selon au moins l'une des revendications 16 à 20, caractérisée en ce que le métal pour soupapes est du titane.

22. Electrode selon au moins l'une des revendications 16 à 21, caractérisée en ce qu'entre la matière plastique de la structure du réseau et la couche conductrice est présente une couche de base électriquement conductrice formée par des métaux déposés de façon autocatalytique, de préférence du cuivre, du nickel ou un métal précieux, ou par un polymère électriquement conducteur.

23. Electrode selon au moins l'une des revendications 16 à 22, caractérisée en ce qu'entre la matière plastique de la structure de réseau et la couche conductrice est présente une couche de base électriquement conductrice en polypyrrol.

24. Electrode selon au moins l'une des revendications 16 à 21, caractérisée en ce que qu'entre la matière plastique de la structure de réseau et la couche conductrice est présente une couche de base électriquement conductrice formée de suie conductrice (carbone), de graphite ou de poudres métalliques, qui peuvent être également liées par une résine.

25. Electrode selon au moins l'une des revendications 16 à 24, caractérisée en ce que la couche de métal pour soupapes possède une épaisseur > 0,01 µm de préférence > 0,03 µm, et notamment comprise entre 0,03 et 0,1 µm.

26. Electrode selon au moins l'une des revendications 16 à 25, caractérisée en ce que la couche de métal pour soupapes est passivée.

27. Electrode selon au moins l'une des revendications 16 à 26, caractérisée en que la couche de métal pour soupapes est passivée galvaniquement.

28. Electrode selon au moins l'une des revendications 16 à 27, caractérisée en ce qu'il s'agit de l'électrode positive d'un élément primaire ou secondaire.

29. Electrode selon au moins l'une des revendications 16 à 28, caractérisée en ce qu'il s'agit de l'électrode positive d'un accumulateur au plomb.

30. Electrode selon au moins l'une des revendications 16 à 29, caractérisée en ce que la couche de métal pour soupapes est recouverte en supplément par une couche de PbO₂.

31. Electrode selon au moins l'une des revendications 16 à 30, caractérisée en ce qu'entre une couche de plomb est présente entre la couche de métal pour soupapes et la couche de PbO₂.

32. Procédé pour fabriquer un support de masse pour des électrodes d'éléments galvaniques primaires et secondaires, par imprégnation d'un matériau textile en forme de nappe, apte à être gaufré, éventuellement électriquement conducteur, avec une résine, qui convient pour la stabilisation mécanique des déformations et est remplie éventuellement par une charge électriquement conducteur, éventuellement un séchage intermédiaire du matériau textile imprégné par la résine, une déformation du matériau textile imprégné par la résine pour former une structure tridimensionnelle possédant des renfoncements et/ou des bossages en forme de bombements répartis sur sa surface et dans la région desquels la distance entre les fils de matière plastique est accrue, au moyen d'un processus de déformation, qui augmente la surface, à une température accrue, à laquelle les résines fondent, à la suite de quoi la température du dispositif de déformation est réglée de telle sorte que la résine d'imprégnation peut durcir, puis une métallisation du matériau ainsi obtenu, déformé selon une déformation tridimensionnelle, par
a) dépôt, le cas échéant, d'une couche de base électriquement conductrice formée d'un métal ou également d'une couche d'autres substances électriquement conductrices, et
b) dépôt électrolytique d'une couche métallique d'une épaisseur de 5 à 300 µm en tant que couche conductrice,
caractérisé en ce qu'on dépose ensuite sur la couche métallique conductrice, une couche de métal pour soupapes possédant une épaisseur d'au moins 0,01 µm, et de préférence comprise entre 0,03 et 0,1 µm.

33. Procédé selon la revendication 32, caractérisé en ce qu'on soumet un tissu maillé à un processus de déformation qui augmente la surface.

34. Procédé selon au moins l'une des revendications 32 et 33, caractérisé en ce qu'entre la matière plastique de la structure du réseau et la couche conductrice, on dépose une couche de base électriquement conductrice formée de métaux déposés de façon autocatalytique, de préférence du cuivre, du nickel ou un métal précieux ou bien un polymère électriquement conducteur.

35. Procédé selon au moins l'une des revendications 32 à 34, caractérisé en ce qu'on dépose une couche de base électriquement conductrice en polypyrrol entre la matière plastique de la structure de réseau et la couche conductrice.

36. Procédé selon au moins l'une des revendications 32 à 33, caractérisé en ce qu'on dépose comme couche de base électriquement conductrice une couche formée de suie conductrice (carbone), de graphite ou de poudres métalliques, qui peuvent être également liées par une résine.

37. Procédé selon au moins l'une des revendications 32 à 36, caractérisé en ce qu'on dépose comme couche de métal pour soupapes, une couche de titane.

38. Procédé selon au moins l'une des revendications 32 à 37, caractérisé en ce qu'on dépose la couche de métal pour soupapes sans discontinuité sur le réseau de support, dans un plasma produit électriquement.

39. Procédé selon au moins l'une des revendications 32 à 38, caractérisé en ce qu'on dépose la couche de métal pour soupapes au moyen d'un placage ionique, d'une pulvérisation catalytique (pulvérisation) dans un gaz inerte ou d'un dépôt par évaporation sous vide poussé.

40. Procédé selon au moins l'une des revendications 32 à 39, caractérisé en ce qu'on applique une passivation galvanique à la couche de métal pour soupapes.

41. Procédé selon au moins l'une des revendications 32 à 40, caractérisé en ce qu'on dépose par voie électrolytique du PbO₂ sur la couche de métal pour soupapes.

42. Procédé selon au moins l'une des revendications 32 à 41, caractérisé ce qu'on introduit une couche de plomb entre la couche de métal pour soupapes et la couche de PbO₂.

43. Procédé selon au moins l'une des revendications 32 à 42, caractérisé en ce qu'on exécute simultanément le dépôt de la couche de PbO₂ et la passivation de la couche de métal pour soupapes.
